# EUROPÄISCHE PATENTSCHRIFT

(11) **EP 2 062 343 B1**
(45) Veröffentlichungstag und Bekanntmachung des Hinweises auf die Patenterteilung: **29.08.2012**
(21) Anmeldenummer: 07820105.0
(22) Anmeldetag: 11.09.2007
(51) Int. Cl.: H02K 1/32, H02K 9/08

(54) **ELEKTRISCHE MASCHINE MIT EINEM INNENGEKÜHLTEN LÄUFER**
ELECTRICAL MACHINE WITH AN INTERNALLY COOLED ROTOR
MACHINE ELECTRIQUE AVEC ROTOR A REFROIDISSEMENT

(30) Priorität: 14.09.2006 DE 102006043169
(43) Veröffentlichungstag der Anmeldung: 27.05.2009
(73) Patentinhaber: SIEMENS AKTIENGESELLSCHAFT, 80333 München (DE)
(72) Erfinder: WEISS, Sebastian, 90522 Oberasbach (DE)
(86) Internationale Anmeldenummer: PCT/EP2007/059493
(87) Internationale Veröffentlichungsnummer: WO 2008/031804

(56) Entgegenhaltungen:
- EP-A- 0 909 004
- DE-A1- 1 769 889
- DE-A1- 19 648 455
- DE-A1- 19 905 540
- DE-A1- 19 908 246
- DE-B- 1 099 064
- DE-C1- 10 107 298

## Beschreibung

Die Erfindung betrifft eine elektrische Maschine mit einem innengekühlten Läufer.

Bei elektrischen Maschinen ist ein leistungsbegrenzender Faktor die Qualität der Verlustwärmeabfuhr. Besonders bei Ausführungen, bei denen die heißen Teile innerhalb der Maschine nicht direkt durch das Kühlmedium gekühlt werden, ist die Ausnutzung der eingesetzten Aktivmasse schlecht. Spezielle Zonen, bei denen die Abfuhr von Verlustwärme problematisch ist, sind die Wickelköpfe und der Läufer. Gelingt es, gezielt aus diesen beiden Zonen Wärme an die Umgebung zu leiten, kann die Leistung einer Elektromaschine bei gleich bleibendem Bauvolumen gesteigert werden.

Aus DE 42 42 132 A1 ist ein Kühlsystem für eine elektrische Maschine bekannt, bei dem es sich um ein Innenkühlkreislaufsystem handelt. Bei dieser Innenkühlung ist es möglich, dass Läuferkühlkanäle in beiden Richtungen axial durchströmt werden. Durch diese Nutzung der Läuferkühlkanäle für eine Durchströmung in zwei Richtungen wird ein maschineninterner Kühlkreislauf generiert. Um diesen Kühlkreislauf in Gang zu setzen, werden zwei Lüfter jeweils an den Stirnseiten des Läufers benötigt.

Aus DE 44 43 427 C2 ist ein Innenkühlkreislaufsystem mit einseitiger Durchströmung des Läufers bekannt. Durch am Läufer vorgesehene, radial innerhalb des Wickelkopfes liegende Lüfterflügel wird der Kühlluftstrom gegen den Wickelkopf geblasen. Über am Ständerumfang angeordnete Kühlkanäle strömt die Kühlluft zur anderen Maschinenseite und dort über den Wickelkopf zum Läufer und tritt schließlich in die Läuferkühlkanäle ein, von denen aus sie wieder zu den Lüfterflügeln gelangt.

Aus DE 101 07 298 C1 ist eine geschlossene elektrische Maschine mit Oberflächenkühlung bekannt.

Der Erfindung liegt die Aufgabe zugrunde, die Kühlleistung einer elektrischen Maschine mit einem innengekühlten Läufer ohne Einsatz eines separat auf den Läufer montierten Lüfterrades zu verbessern.

Diese Aufgabe wird gelöst durch eine elektrische Maschine nach dem Anspruch 1 mit einem Ständerblechpaket und einem Läufer in einem Gehäuse, die einen Innenkühlkreis aus den Läufer axial durchsetzenden und auf zwei konzentrischen Kreisen angeordneten Läuferkühlkanälen aufweist, in welchem ein gasförmiges Kühlmittel umwälzbar ist, wobei bei der Maschine auf einer ersten Läuferstirnseite Lüfterflügel und ein erstes Mittel zum Leiten des Kühlmittels von den Läuferkühlkanälen auf einem der beiden konzentrischen Kreise über einen Wickelkopf zu den Läuferkühlkanälen auf dem anderen der beiden konzentrischen Kreise vorgesehen sind.

Durch die Führung des Kühlmittels, das beispielsweise Luft oder ein inertes Gas sein kann, durch die Läuferkühlkanäle auf den verschiedenen konzentrischen Kreisen in beide Richtungen, wobei der Kühlmittelkreislauf durch auf der Läuferstirnseite angebrachte Lüfterflügel angetrieben und hier durch die Mittel zum Leiten des Kühlmittels direkt auf einen Wickelkopf geblasen wird, werden insbesondere die Bereiche optimal gekühlt, bei denen die Abfuhr von Verlustwärme problematisch ist. Dabei erstrecken sich die Lüfterflügel pragmatischerweise axial von der Läuferstirnseite, können aber auch jede andere zweckmäßige Form aufweisen. Da die erfindungsgemäße Lösung ohne separates Lüfterrad auskommt, ist hier keine zusätzliche Bearbeitung der Läuferwelle für die Lüfterrad-Montage erforderlich, wodurch neben einer Kosteneinsparung auch eine kürzere axiale Baulänge der elektrischen Maschine erzielbar ist.

In einer vorteilhaften Form der Ausgestaltung ist das erste Mittel zum Leiten des Kühlmittels als Luftleitzylinder ausgeführt, der zwischen den zwei konzentrischen Kreisen angeordnet ist, sich axial von der ersten Läuferstirnseite bis vor die Lüfterflügel erstreckt und vor den Lüfterflügeln einen nach außen weisenden Teil aufweist. Dabei muss der Luftleitzylinder vor dem nach außen weisenden Teil nicht eine strenge Zylinderform haben, sondern kann im Wesentlichen einem halben einschaligen Rotationshyperboloid entsprechen. So wird auf einfache Weise der aus den Läuferkühlkanälen auf beispielsweise dem äußeren der beiden konzentrischen Kreise austretende Kühlmittelstrom direkt zum Wickelkopf geleitet. Durch den axial vor den Lüfterflügeln angeordneten nach außen weisenden Teil des Luftleitzylinders wird ein Raum geschaffen, der sich vom Austritt der Läuferkühlkanäle an der betreffenden Läuferstirnseite bis zu den Lüfterflügeln erstreckt. Damit wird die Kühlmittelführung des Innenkühlkreises wesentlich verbessert.

In einer weiteren vorteilhaften Ausführungsform ist ein zum ersten Mittel zum Leiten des Kühlmittels identisch geformtes zweites Mittel zum Leiten des Kühlmittels an einer zweiten Läuferstirnseite angeordnet. Hierdurch wird die Kühlmittelführung des Innenkühlkreises im Bereich des Wickelkopfes auf der Seite der zweiten Läuferstirnseite ebenfalls wesentlich verbessert.

In einer weiteren vorteilhaften Ausführungsform sind die Lüfterflügel auf der ersten Läuferstirnseite derart ausgeführt, dass sie das Kühlmittel radial nach außen fördern. Die auf das Kühlmittel radial nach außen wirkende Kraft überlagert sich dabei mit der Trägheitskraft des aus den Läuferkühlkanälen austretenden Kühlmittels zu einer Gesamtkraft, die auf das Kühlmittel im Wesentlichen bereits in Richtung Wickelkopf wirkt. Hierdurch wird die Durchströmung weiter verbessert, da hier im Vergleich zu beispielsweise einer axialen Förderung, bei der der Kühlmittelstrom nur von den Mitteln zum Leiten des Kühlmittels zum Wickelkopf geleitet wird, weniger Verwirbelungen auftreten.

In einer weiteren vorteilhaften Ausführungsform sind auf der zweiten Läuferstirnseite sich axial erstreckende Lüfterflügel vorgesehen, die derart ausgeführt sind, dass eine durch die auf der ersten Läuferstirnseite vorgesehenen Lüfterflügel hervorgerufene Kühlmittelströmung verstärkt wird. D.h. die Lüfterflügel auf der zweiten Läuferstirnseite fördern das Kühlmittel, wenn die Lüfterflügel auf der ersten Läuferstirnseite für eine zwischen radial und axial nach außen gerichtete Förderung vorgesehen sind, in eine zwischen radial und axial nach innen weisende Richtung.

In einer weiteren vorteilhaften Ausführungsform liegt der nach außen weisende Teil des zumindest einen Luftleitzylinders direkt an jeweils einer radial verlaufenden Stirnkante der Lüfterflügel an oder ist axial geringfügig von diesen Stirnkanten beabstandet. Damit werden Leckströme gegenüber dem die Läuferkühlkanäle durchsetzenden Kühlmittelstrom praktisch gänzlich unterdrückt.

In einer weiteren vorteilhaften Ausführungsform erstreckt sich der nach außen weisende Teil des zumindest einen Luftleitzylinders radial mindestens bis zu einer radial außen liegenden Umfangskante der Lüfterflügel. Auf diese Weise werden am Wickelkopf vorbeiführende Verzweigungsströme vermieden.

In einer weiteren vorteilhaften Ausführungsform sind bei einer Ausbildung des Läufers als Kurzschlussläufer die Lüfterflügel an dem entsprechenden Kurzschlussring angeformt. Damit erübrigen sich ein gesondertes Herstellen der Lüfterflügel und deren Montage am Läufer.

In einer weiteren vorteilhaften Ausführungsform weisen die Läuferkühlkanäle einen Querschnitt mit einem im Vergleich zu einem Kreis gleicher Querschnittsfläche vergrößerten Umfang auf. Dabei kann der Querschnitt beispielsweise einen wellenförmigen Umfang aufweisen oder von eckiger oder sternförmiger Form sein. Somit steht eine größere Wärmeübergangsfläche zur Kühlung des Läufers zur Verfügung.

In einer weiteren vorteilhaften Ausführungsform sind auf der Läuferstirnseite je konzentrischem Kreis ein Mittelpunkt eines Läuferkühlkanals und ein Lüfterflügel radial von innen nach außen in einer Linie angeordnet. So wirkt gewissermaßen auf jeden Läuferkühlkanal ein eigener Lüfterflügel, wodurch die Förderwirkung der Lüfterflügel auf das Kühlmittel verbessert wird.

In einer weiteren vorteilhaften Ausführungsform ist die Summe der Querschnittsflächen der Läuferkühlkanäle auf dem einen der beiden konzentrischen Kreise gleich der Summe der Querschnittsflächen der Läuferkühlkanäle auf dem anderen der beiden konzentrischen Kreise. Dies sorgt für eine gleichmäßige Durchströmung der Läuferkühlkanäle auf den unterschiedlichen konzentrischen Kreisen, wodurch Verwirbelungen durch verschieden Strömungsgeschwindigkeiten vermieden werden.

In einer weiteren vorteilhaften Ausführungsform sind am Gehäuseumfang von einem Kühlmedium durchströmte Primär-Kühlkanäle für einen Außenkühlkreis vorgesehen. Durch die Abführung von Wärme an ein primäres Kühlmedium, das gasförmig oder flüssig sein kann, wird die Rückkühlung des Kühlmittels im Innenkreislauf wesentlich verbessert.

In einer weiteren vorteilhaften Ausführungsform sind dabei die Primär-Kühlkanäle schraubenförmig am Gehäuseumfang angeordnet. Hierdurch wird eine im Vergleich zu nur in den Ecken eines z.B. rechteckigen Gehäuses vorgesehenen Primär-Kühlkanälen eine bezogen auf den Gehäuseumfang gleichmäßigere Kühlung erzielt, wobei die Bauweise einfacher ist als beispielsweise bei einer mäanderförmigen Struktur der Primär-Kühlkanäle.

In einer weiteren vorteilhaften Ausführungsform ist dabei die Ganghöhe zwischen aufeinander folgenden Windungen der schraubenförmig angeordneten Primär-Kühlkanäle in den Bereichen der Wickelköpfe kleiner als im Bereich zwischen den Wickelköpfen. Somit ist die Kühlwirkung in den Bereichen besonders groß, in denen die Rückkühlung des Kühlmittels des Innenkreislaufs durch das primäre Kühlmedium erfolgt.

In einer weiteren vorteilhaften Ausführungsform sind am Gehäuseumfang Kühlrippen vorgesehen. Hierdurch steht für den Wärmeaustausch mit der Umgebung oder dem primären Kühlmedium eine besonders große Oberfläche zur Verfügung.

In einer weiteren vorteilhaften Ausführungsform ist die Maschine als Asynchronmaschine ausgeführt. Hierbei können die Lüfterflügel direkt an einen Kurzschlussring eines z.B. Aluminiumdruckgussläufers mit angegossen werden.

Im Folgenden wird die Erfindung anhand der in den Figuren dargestellten Ausführungsbeispiele näher beschrieben und erläutert. Es zeigen:
- FIG 1: eine Hälfte einer elektrischen Maschine im Längsschnitt,
- FIG 2: einen Ausschnitt von Ständerblechpaket und Läufer im Querschnitt.

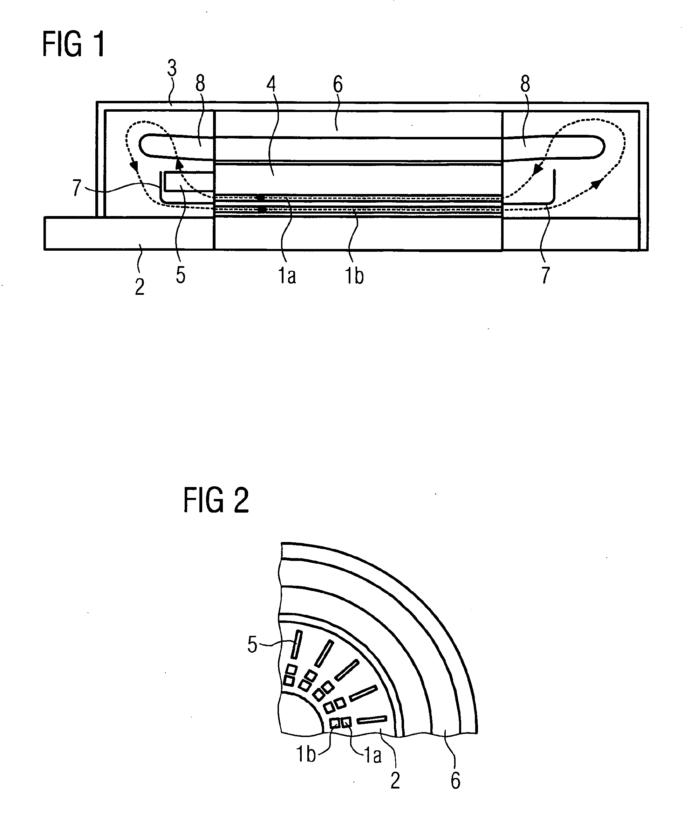

Fig 1 zeigt eine Hälfte einer elektrischen Maschine mit einem Ständerblechpaket 6 und einem Läufer 2 in einem Gehäuse 3 im Querschnitt. Zwischen der Welle des Läufers 2 und dem Aktivteil 4 sind Läuferkühlkanäle 1a, 1b auf zwei konzentrischen Kreisen angeordnet. An der linken Läuferstirnseite sind Lüfterflügel 5 angebracht, die das umgewälzte Kühlmittel, das aus den auf dem äußeren Kreis liegenden Läuferkühlkanälen 1a herausströmt, radial nach außen fördern. Zusammen mit der Trägheitsbewegung des aus den Läuferkühlkanälen 1a strömenden Kühlmittels ergibt sich eine im Wesentlichen radial gerichtete Bewegung des Kühlmittels, wobei ein zwischen den beiden konzentrischen Kreisen angebrachter Luftleitzylinder 7 sicherstellt, dass der Wickelkopf 8 direkt vom Kühlmittel angeblasen wird und dass keine Verwirbelungen mit dem durch die auf dem inneren Kreis angeordneten Läuferkühlkanäle 1b auf die rechte Seite der Maschine zurückströmenden Kühlmittel auftreten. An der rechten Seite ist ebenfalls ein Luftleitzylinder 7 an der Läuferstirnseite angebracht, um das Kühlmittel in geeigneter Weise durch die Räume zwischen Gehäuse 3 und Aktivteil 4 zu führen, wo auch die Rückkühlung des Kühlmittels durch das primäre Kühlmedium (nicht dargestellt) erfolgt. Die gestrichelte Linie zeigt den Strömungspfad des Kühlmittels mit zweiseitiger Durchströmung des Läufers 2.
Durch die an der Läuferstirnseite angebrachten Lüfterflügel 5 wird das Kühlmittel, z.B. Luft, in Rotation versetzt, und es entsteht ein radialer Druckanstieg. Diese Lüfterflügel 5 können z.B. bei Asynchronmaschinen mit Aluminiumdruckgussläufern direkt an die Kurzschlussringe mit angegossen werden.

Fig 2 zeigt einen Ausschnitt von Ständerblechpaket 6 und Läufer 2 im Querschnitt. Von innen nach außen sind je konzentrischem Kreis ein Läuferkühlkanal 1a, 1b und ein Lüfterflügel 5 angeordnet. Die Läuferkühlkanäle 1a, 1b weisen zur Vergrößerung der Wärmeaustauschfläche einen viereckigen statt runden Querschnitt auf. Dabei ist die Querschnittsfläche der Läuferkühlkanäle 1a, 1b auf beiden konzentrischen Kreisen gleich groß, so dass Verwirbelungen durch unterschiedliche Strömungsgeschwindigkeiten vermieden werden.

Zusammenfassend betrifft die Erfindung eine elektrische Maschine mit einem innengekühlten Läufer. Um die Kühlleistung einer derartigen Maschine ohne Einsatz eines separat auf den Läufer montierten Lüfterrades zu verbessern, wird eine elektrische Maschine mit einem Ständerblechpaket und einem Läufer in einem Gehäuse vorgeschlagen, die einen Innenkühlkreis aus den Läufer axial durchsetzenden und auf zwei konzentrischen Kreisen angeordneten Läuferkühlkanälen aufweist, in welchem ein gasförmiges Kühlmittel umwälzbar ist, wobei bei der Maschine auf einer ersten Läuferstirnseite Lüfterflügel und ein erstes Mittel zum Leiten des Kühlmittels von den Läuferkühlkanälen auf einem der beiden konzentrischen Kreise über einen Wickelkopf zu den Läuferkühlkanälen auf dem anderen der beiden konzentrischen Kreise vorgesehen sind. Hierdurch werden insbesondere die Bereiche optimal gekühlt, bei denen die Abfuhr von Verlustwärme problematisch ist.

## Patentansprüche

1. Elektrische Maschine mit einem Ständerblechpaket (6) in einem Gehäuse (3) und einem Läufer (2), die einen Innenkühlkreis aus den Läufer (2) axial durchsetzenden und auf zwei konzentrischen Kreisen angeordneten Läuferkühlkanälen (1a, 1b) aufweist, in welchem ein gasförmiges Kühlmittel umwälzbar ist, wobei bei der Maschine auf einer ersten Läuferstirnseite Lüfterflügel (5) und ein erstes Mittel zum Leiten des Kühlmittels (7) von den Läuferkühlkanälen (1a) auf einem der beiden konzentrischen Kreise über einen Wickelkopf (8) zu den Läuferkühlkanälen (1b) auf dem anderen der beiden konzentrischen Kreise vorgesehen sind, wobei das erste Mittel zum Leiten des Kühlmittels als Luftleitzylinder (7) ausgeführt ist, der zwischen den zwei konzentrischen Kreisen angeordnet ist, sich axial von der ersten Läuferstirnseite bis vor die Lüfterflügel (5) erstreckt und vor den Lüfterflügeln (5) einen nach außen weisenden Teil aufweist, wobei ein zum ersten Mittel zum Leiten des Kühlmittels (7) identisch geformtes zweites Mittel zum Leiten des Kühlmittels (7) an einer zweiten Läuferstirnseite angeordnet ist, wobei der nach außen weisende Teil des zumindest einen Luftleitzylinders (7) direkt an jeweils einer radial verlaufenden Stirnkante der Lüfterflügel. (5) anliegt oder axial geringfügig von diesen Stirnkanten beabstandet ist, wobei sich der nach außen weisende Teil des zumindest einen Luftleitzylinders (7) radial mindestens bis zu einer radial außen liegenden Umfangskante der Lüfterflügel (5) erstreckt, wobei die Lüfterflügel sich radial außerhalb des äußeren konzentrischen Kreises von Kühlkanälen befinden

2. Elektrische Maschine nach Anspruch 1, wobei die Lüfterflügel (5) auf der ersten Läuferstirnseite derart ausgeführt sind, dass sie das Kühlmittel radial nach außen fördern.

3. Elektrische Maschine nach einem der vorhergehenden Ansprüche, wobei auf der zweiten Läuferstirnseite sich axial erstreckende Lüfterflügel vorgesehen sind, die derart ausgeführt sind, dass eine durch die auf der ersten Läuferstirnseite vorgesehenen Lüfterflügel (5) hervorgerufene Kühlmittelströmung verstärkt wird.

4. Elektrische Maschine nach einem der vorhergehenden Ansprüche, wobei bei einer Ausbildung des Läufers (2) als Kurzschlussläufer die Lüfterflügel (5) an dem entsprechenden Kurzschlussring angeformt sind.

5. Elektrische Maschine nach einem der vorhergehenden Ansprüche, wobei die Läuferkühlkanäle (1a, 1b) einen Querschnitt mit einem im Vergleich zu einem Kreis gleicher Querschnittsfläche vergrößerten Umfang aufweisen.

6. Elektrische Maschine nach einem der vorhergehenden Ansprüche, wobei auf der Läuferstirnseite je konzentrischem Kreis ein Mittelpunkt eines Läuferkühlkanals (1a, 1b) und ein Lüfterflügel (5) radial von innen nach außen in einer Linie angeordnet sind.

7. Elektrische Maschine nach einem der vorhergehenden Ansprüche, wobei die Summe der Querschnittsflächen der Läuferkühlkanäle (1a) auf dem einen der beiden konzentrischen Kreise gleich der Summe der Querschnittsflächen der Läuferkühlkanäle (1b) auf dem anderen der beiden konzentrischen Kreise ist.

8. Elektrische Maschine nach einem der vorhergehenden Ansprüche, wobei am Gehäuseumfang von einem Kühlmedium durchströmte Primär-Kühlkanäle für einen Außenkühlkreis vorgesehen sind.

9. Elektrische Maschine nach Anspruch 8, wobei die Primär-Kühlkanäle schraubenförmig am Gehäuseumfang angeordnet sind.

10. Elektrische Maschine nach Anspruch 9, wobei die Ganghöhe zwischen aufeinander folgenden Windungen der schraubenförmig angeordneten Primär-Kühlkanäle in den Bereichen der Wickelköpfe (8) kleiner ist als im Bereich zwischen den Wickelköpfen (8).

11. Elektrische Maschine nach einem der vorhergehenden Ansprüche, wobei am Gehäuseumfang Kühlrippen vorgesehen sind.

12. Elektrische Maschine nach einem der vorhergehenden Ansprüche, wobei die Maschine als Asynchronmaschine ausgeführt ist.

## Claims

1. Electrical machine having a laminated stator core (6) in a housing (3) and having a rotor (2) which electrical machine has an internal cooling circuit comprising rotor cooling channels (1a, 1b) which pass axially through the rotor (2) and are arranged on two concentric circles, in which internal cooling circuit a gaseous coolant can circulate wherein fan blades (5) and a first means for guiding the coolant (7) from the rotor cooling channels (1a) on one of the two concentric circles via an end winding (8) to the rotor cooling channels (1b) on the other of the two concentric circles are provided on a first rotor end face of the machine, wherein the first means for guiding the coolant is in the form of an air guide cylinder (7), which is arranged between the two concentric circles, extends axially from the first rotor end face to in front of the fan blades (5) and has a part which points outwards in front of the fan blades (5), wherein a second means, for guiding the coolant (7), which is formed identically to the first means for guiding the coolant (7) is arranged on a second rotor end face, wherein that part of the at least one air guide cylinder (7) which points outwards rests directly on a respective radially running end edge of the fan blades (5) or is axially at a short distance from these end edges, wherein that part of the at least one air guide cylinder (7) which points outwards extends radially at least to a circumferential edge, which is located radially on the outside, of the fan blades (5), and wherein the fan blades are located radially outside the outer concentric circle of cooling channels.

2. Electrical machine according to Claim 1,
wherein the fan blades (5) on the first rotor end face are designed such that they feed the coolant radially outwards.

3. Electrical machine according to one of the preceding claims,
wherein axially extending fan blades are provided on the second rotor end face and are designed such that a coolant flow which is caused by the fan blades (5) provided on the first rotor end face is increased.

4. Electrical machine according to one of the preceding claims,
wherein, when the rotor (2) is in the form of a squirrel-cage rotor, the fan blades (5) are formed on the corresponding short-circuiting ring.

5. Electrical machine according to one of the preceding claims,
wherein the rotor cooling channels (1a, 1b) have a cross section with a circumference which is larger than that of a circle with the same cross-sectional area.

6. Electrical machine according to one of the preceding claims,
wherein, for each concentric circle on the rotor end face, a center point of a rotor cooling channel (1a, 1b) and a fan blade (5) are arranged radially from the inside outwards in a line.

7. Electrical machine according to one of the preceding claims,
wherein the sum of the cross-sectional areas of the rotor cooling channels (1a) on one of the two concentric circles is equal to the sum of the cross-sectional areas of the rotor cooling channels (1b) on the other of the two concentric circles.

8. Electrical machine according to one of the preceding claims,
wherein primary cooling channels, through which a cooling medium flows, for an outer cooling circuit are provided on the housing circumference.

9. Electrical machine according to Claim 8,
wherein the primary cooling channels are arranged in a helical shape on the housing circumference.

10. Electrical machine according to Claim 9,
wherein the pitch height between successive turns of the helically arranged primary cooling channels is less in the area of the end windings (8) than in the area between the end windings (8).

11. Electrical machine according to one of the preceding claims,
wherein cooling ribs are provided on the housing circumference.

12. Electrical machine according to one of the preceding claims,
wherein the machine is in the form of an asynchronous machine.

## Revendications

1. Machine électrique, ayant un paquet ( 6 ) de tôles statoriques dans un carter ( 3 ) et un rotor ( 2 ), qui comporte un circuit intérieur de refroidissement traversant axialement le rotor ( 2 ) en en sortant et des canaux ( 1a, 1b ) de refroidissement du rotor disposés sur deux cercles concentriques, dans lequel un fluide de refroidissement gazeux peut être recirculé, dans laquelle, dans la machine, il est prévu, sur un premier côté frontal du rotor, des ailes ( 5 ) de ventilateur et un premier moyen de conduite du fluide ( 7 ) de refroidissement des canaux ( 1a ) de refroidissement du rotor, sur l'un des deux cercles concentriques sur une tête ( 8 ) de bobine aux canaux ( 1b ) de refroidissement du rotor, sur l'autre des deux cercles concentriques, dans lequel le premier moyen de conduite du fluide de refroidissement est réalisé en cylindre ( 7 ) de conduite d'air, qui est disposé entre les deux cercles concentriques, qui s'étend axialement du premier côté frontal du rotor jusqu'avant les ailes ( 5 ) du ventilateur et qui a, devant les ailes ( 5 ) du ventilateur, une partie tournée vers l'extérieur, un deuxième moyen de forme identique au premier moyen de conduite du fluide ( 7 ) de refroidissement étant disposé pour conduire le fluide ( 7 ) de refroidissement sur un deuxième côté frontal du rotor, la partie tournée vers l'extérieur du au moins un cylindre ( 7 ) de conduite d'air s'applique directement à respectivement une arête frontale s'étendant radialement des ailes ( 5 ) du ventilateur ou étant à une petite distance axiale de ces arêtes frontales, la partie tournée vers l'extérieur du au moins un cylindre ( 7 ) de conduite d'air s'étendant radialement, au moins jusqu'à une arête périphérique à l'extérieur radialement des ailes du ventilateur, les ailes du ventilateur se trouvant à l'extérieur radialement du cercle concentrique extérieur des canaux de refroidissement.

2. Machine électrique suivant la revendication 1, dans laquelle les ailes ( 5 ) de ventilateur sont réalisées sur le premier côté frontal du rotor, de manière à transporter le fluide de refroidissement radialement vers l'extérieur.

3. Machine électrique suivant l'une des revendications précédentes, dans laquelle il est prévu, sur le deuxième côté frontal du rotor, des ailes de ventilateur s'étendant axialement, qui sont réalisées de manière à renforcer un courant de fluide de refroidissement dans les ailes ( 5 ) de ventilateur prévues du premier côté frontal du rotor.

4. Machine électrique suivant l'une des revendications précédentes, dans laquelle, lorsque le rotor ( 2 ) est constitué sous la forme d'un rotor à court-circuit, les ailes ( 5 ) du ventilateur sont formées sur l'anneau de court-circuit correspondant.

5. Machine électrique suivant l'une des revendications précédentes, dans laquelle les canaux ( 1a, 1b ) de refroidissement du rotor ont une section transversale ayant un pourtour agrandi par rapport à un cercle de même surface de section transversale.

6. Machine électrique suivant l'une des revendications précédentes, dans laquelle, du côté frontal du rotor, pour respectivement un cercle concentrique, un centre d'un canal ( 1a, 1b ) de refroidissement du rotor et une aile ( 5 ) de ventilateur sont disposés suivant une ligne allant radialement de l'intérieur à l'extérieur.

7. Machine électrique suivant l'une des revendications précédentes, dans laquelle la somme des sections transversales des canaux ( 1a ) de refroidissement du rotor, sur l'un des deux cercles concentriques, est égale à la somme des surfaces de section transversale des canaux ( 1b ) de refroidissement du rotor, sur l'autre des deux cercles concentriques.

8. Machine électrique suivant l'une des revendications précédentes, dans laquelle, sur le pourtour du carter, il est prévu, pour un circuit de refroidissement extérieur, des canaux de refroidissement primaires parcourus par du fluide de refroidissement.

9. Machine électrique suivant la revendication 8, dans laquelle les canaux de refroidissement primaires sont disposés en hélice sur le pourtour du carter.

10. Machine électrique suivant la revendication 8, dans laquelle le pas entre des spires qui se suivent des canaux de refroidissement primaires disposés en hélice est plus petit dans les régions des têtes ( 8 ) de bobine que dans la région comprise entre les têtes ( 8 ) de bobine.

11. Machine électrique suivant l'une des revendications précédentes, dans laquelle des ailettes de refroidissement sont prévues sur le pourtour du carter.

12. Machine électrique suivant l'une des revendications précédentes, dans laquelle la machine est réalisée sous la forme d'une machine asynchrone.
